# EUROPEAN PATENT APPLICATION

(11) **EP 3 182 576 A1**
(43) Date of publication of application: **21.06.2017**
(21) Application number: 16200294.3
(22) Date of filing: 23.11.2016
(51) Int. Cl.: H02P 6/15, A47L 9/28

(54) **MOTOR CONTROL SYSTEM, CONTROL METHOD AND VACUUM CLEANER**

(30) Priority: 07.12.2015 CN 201510894852
(71) Applicant: Johnson Electric S.A., 3280 Murten (CH)
(72) Inventor: Gao, Yong Sheng, Hong Kong (HK); Ma, Hai Bo, Hong Kong (HK); Lo, Yuk Tung, Hong Kong (HK); Chen, Song, Hong Kong (HK); Yip, Siu Chung, Hong Kong (HK); Chen, Jin Zhou, Hong Kong (HK); Zou, Jian Xun, Hong Kong (HK)
(74) Representative: Hocking, Adrian Niall

(57) **Abstract**

A motor control system (1) controls power supplying of a motor. The motor control system (1) is configured to control the motor (3) be excited in advance of a zero crossing of a back electromotive force by an advance angle, and the advance angle gradually increases from an acceleration mode to a constant speed operating mode after the motor (3) is started. The motor control system (1) is further configured to control the motor (3) to be excited within a conduction angle, and the conduction angle gradually reduces to a pre-determined value from the acceleration mode to the constant speed operating mode after the motor (3) is started.

## Description

### TECHNICAL FIELD

The present disclosure relates to a control system, and in particular to a motor control system, a motor control method and a vacuum cleaner including the motor control system, which can improve efficiency.

### BACKGROUND

At present, motors have been applied to various household appliances, such as a vacuum cleaner, as power sources. In general, household appliances such as a vacuum cleaner need to be driven by motors operating at high rotational speeds. As a rotational speed of a motor increases, a back electromotive force increases as well, which reduces utilization efficiency of a power supply for the motor.

### SUMMARY

In view of the above, a motor control system, a motor control method and a vacuum cleaner, which can improve efficiency, are provided according to the present disclosure, so as to improve utilization efficiency of a power supply for a motor in a case that a rotor is operating at a high speed.

A motor control system for controlling power supplying for a motor , wherein the motor control system is configured to control the motor be excited in advance of a zero crossing of a back electromotive force by an advance angle, and the advance angle gradually increases from an acceleration mode to a constant speed operating mode after the motor is started, the motor control system is further configured to control the motor to be excited within a conduction angle, and the conduction angle gradually reduces to a pre-determined value from the acceleration mode to the constant speed operating mode after the motor is started.

Further, the motor control system controls the motor to be freewheeled within a freewheeling angle after the excitation is performed for the conduction angle.

Further, the motor control system includes an inverter, a position sensor and a drive controller; wherein the motor comprises a stator and a rotor which is rotatable relative to the stator; the inverter is coupled between a power supply and the motor and to establish or cut off a power supply path between the power supply and the motor, and the position sensor is configured to detect a position of the rotor of the motor to generate a detection signal and send the detection signal to the drive controller; and the drive controller is coupled between the position sensor and the inverter and is configured to output a drive signal according to the detection signal the inverter is controlled by the drive signal to turn on an electric connection between the power supply and the motor in advance of the zero crossing of the back electromotive force by the advance angle; and the inverter is controlled to cut off the electric connection between the power supply and the motor is freewheeled for the freewheeling angle after the electric connection is turned on for the conduction angle; thereby the motor is freewheeled within the freewheeling angle after the excitation is performed for the conduction angle.

Further, the inverter is an H-bridge circuit, which comprises a first semiconductor switch (Q1), a second semiconductor switch, a third semiconductor switch and a fourth semiconductor switch; the first semiconductor switch (Q1) and the second semiconductor switch are connected in series between a positive terminal and a negative terminal of the power supply in sequence, and the third semiconductor switch and the fourth semiconductor switch are also connected in series between the positive terminal and the negative terminal of the power supply in sequence; and the motor further comprises a first electrode terminal and a second electrode terminal, the first electrode terminal is connected to a connection node between the first semiconductor switch (Q1) and the second semiconductor switch, and the second electrode terminal is connected to a connection node between the third semiconductor switch and the fourth semiconductor switch.

Further, the drive controller is connected to the first semiconductor switch (Q1), the second semiconductor switch, the third semiconductor switch and the fourth semiconductor switch, and is configured to output first, second, third and fourth drive signals to respectively control the first semiconductor switch (Q1), the second semiconductor switch, the third semiconductor switch and the fourth semiconductor switch, and the first, second, third and fourth semiconductor switches are switches turned on at high levels.

Further, in a first half-electric-cycle, the drive controller controls the first drive signal to jump to a high level in advance of a current edge of the detection signal by the advance angle, controls the second drive signal to jump to a low level in advance of the edge of the detection signal by the advance angle, controls the third drive signal to remain at a low level, and controls the fourth drive signal to remain at a high level; and the first and the fourth semiconductor switches are turned on, the second and the third semiconductor switches are turned off, and the power supply provides an excitation voltage in a first direction to excite the motor.

Further, the drive controller controls the first drive signal to jump to a low level after the excitation voltage is applied for the conduction angle, the second drive signal to jump to a high level, the third drive signal to remain at the low level, and the fourth drive signal to remain at the high level; and the first and the third semiconductor switches are turned off, the second and the fourth semiconductor switches are turned on, the electric connection between the motor and the power supply is cut off, and the motor forms a freewheeling circuit to perform the freewheeling with the second semiconductor switch and the fourth semiconductor switch which are turned on.

Further, at a point an angle of (180°-θ_{adv}) after a previous edge of the detection signal, the drive controller controls the first drive signal to jump to a high level, the second drive signal to jump to a low level, the third drive signal to remain at the low level, and the fourth drive signal to remain at the high level, and θ_{adv} is the advance angle.

Further, the drive controller controls the motor is kept excited within a drive angle θ_{adv} after the current edge of the detection signal, and after the drive angle θ_{adv}, the first drive signal is controlled to jump to a low level, the second drive signal is controlled to jump to a high level, the third drive signal is controlled to remain at the low level, and the fourth drive signal is controlled to remain at the high level, θ_{adv}=θ_{con}-θ_{adv}, θ_{adv} is the advance angle, and θ_{con} is the conduction angle.

Further, in a next half-electric-cycle, the drive controller controls the third drive signal to jump to a high level, the fourth drive signal to jump to a low level, the first drive signal to remain at the low level, and the second drive signal to remain at the high level in advance of a next edge of the detection signal, and after the excitation voltage is applied for the conduction angle, the drive controller controls the first drive signal to remain at the low level, the second drive signal to remain at the high level, the third drive signal to jump to a low level and the fourth drive signal to jump to a high level.

Further, a range of the advance angle is from zero degree to 30°.

Further, the pre-determined value is 108°, and the motor control system controls the conduction angle to gradually decrease from 180° to the pre-determined value.

A motor control method includes: exciting a motor in advance of a zero crossing of a back electromotive force in the motor by the advance angle, wherein the advance angle gradually increases during a process from an acceleration mode to a constant speed operating mode after the motor is started; and
controlling the motor to be excited a conduction angle, wherein the conduction angle gradually decreases from 180° to a pre-determined value during the process from the acceleration mode to the constant speed operating mode after the motor is started.

Further, a range of the advance angle is from zero degree to 30°.

Further, the pre-determined value is 108°.

Further, the motor control method further includes controlling the motor to be excited within the conduction angle and to be freewheeled within a freewheeling angle in order in each half-electric-cycle.

A vacuum cleaner comprising a motor, wherein the vacuum cleaner further comprises the motor control system as described-above.

### BRIEF DESCRIPTION OF THE DRAWINGS

The present disclosure is further described hereinafter in conjunction with drawings in the specification and some embodiments.
Figure 1 is a structural block diagram of a vacuum cleaner according to an embodiment of the present disclosure;
Figure 2 is a diagram of functional modules of a motor control system according to an embodiment of the present disclosure;
Figure 3 is a block diagram of a specific circuit of a motor control system according to an embodiment of the present disclosure;
Figure 4 is a timing diagram of drive signals according to an embodiment of the present disclosure;
Figure 5 is a timing diagram of drive signals according to another embodiment of the present disclosure; and
Figure 6 is a flow chart of a motor control method according to an embodiment of the present disclosure.

### DETAILED DESCRIPTION OF THE EMBODIMENTS

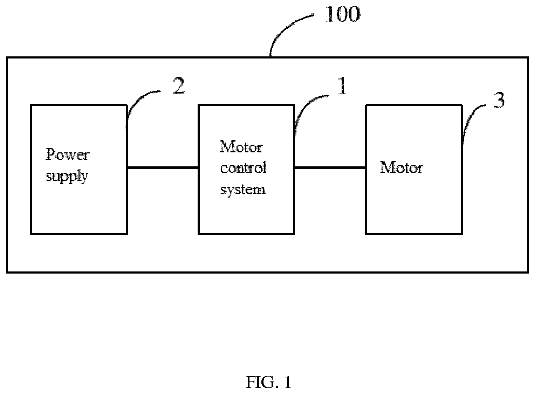

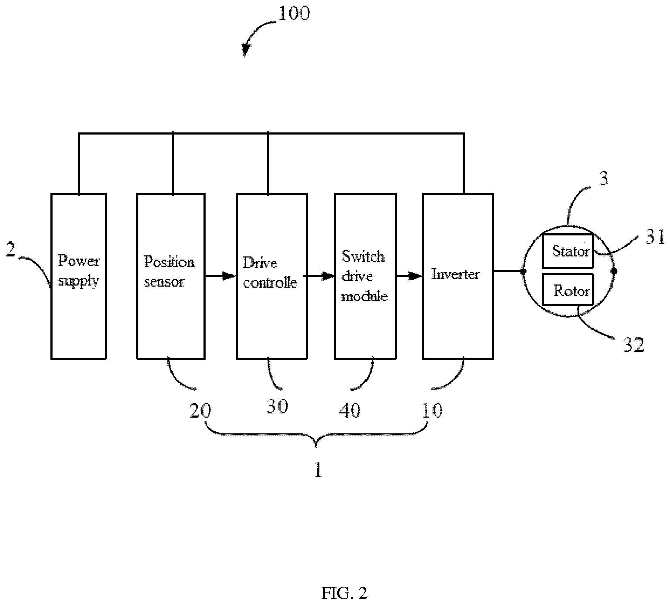

Referring to Figure 1, which is a structural block diagram of a vacuum cleaner 100 according to an embodiment of the present disclosure. The vacuum cleaner 100 includes a motor control system 1, a power supply 2 and a motor 3. The motor control system 1 is configured to control the power supply 2 to provide power for the motor 3. The motor control system 1 controls the power supply 2 to provide an excitation voltage for exciting the motor 3 in advance of zero-crossings of back electromotive force by an advance angle. The motor control system 1 gradually increases the advance angle during a process from an acceleration mode to a constant speed operating mode after the motor 3 is started. The power supply 2 is a direct current power supply which outputs a voltage of 24V or 12V The acceleration mode refers to a stage in which a rotational speed of a rotor 32 (shown in Figure 2) of the motor 3 increases gradually, and the constant speed operating mode refers to a stage in which the rotational speed of the rotor 32 of the motor 3 remains a pre-determined speed.

The motor control system 1 further excites the motor within a conduction angle, and the motor control system 1 gradually reduces the conduction angle to a pre-determined value during the process from the acceleration mode to the constant speed operating mode after the motor 3 is started. The conduction angle refers to an angle from starting of excitation to finishing of the excitation in a half-electric-cycle in which the motor 3 is powered on.

In a half-electric-cycle, the motor control system 1 controls the motor 3 to freewheel after the conduction angle. Therefore, in a half-electric-cycle, the motor control system 1 controls the motor 3 to be sequentially excited and freewheeled.

The advance angle is set and selected to maximize torque which is applied to the motor 3 at the beginning of each excitation, so as to improve efficiency of the motor 3.

Referring also to Figure 2, which is a diagram of functional modules of the motor control system 1. The motor control system 1 includes an inverter 10, a position sensor 20 and a drive controller 30. The motor 3 includes a stator 31 and the rotor 32 which is rotatable relative to the stator 31. The inverter 10 is coupled between the power supply 2 and the motor 3 and is configured to establish or cut off a power supply path between the power supply 2 and the motor 3. The drive controller 30 is coupled between the position sensor 20 and the inverter 10. The position sensor 20 is configured to detect a position of the rotor 32 of the motor 3, generate a detection signal which includes a signal indicating the zero crossing of the back electromotive force, and send the detection signal to the drive controller 30. The drive controller 30 outputs a drive signal according to the detection signal to control the inverter 10 to turn on an electric connection between the power supply 2 and the motor 3 in advance of the zero crossing of the back electromotive force by the advance angle. Such that, the motor 3 is excited advance, and the inverter 10 is controlled to cut off the electric connection between the power supply 2 and the motor 3 after the conduction angle, so as to control the motor 3 to be freewheeled after the excitation is performed for the conduction angle.

As shown in Figure 2, the motor control system 1 further includes a switch drive module 40. The switch drive module 40 is connected between the drive controller 30 and the inverter 10 and is configured to boost the drive signal outputted by the drive controller 30 to drive the inverter 10.

The drive controller 30 further enables, based on the drive signal generated based on the detection signal of the position sensor 20, the inverter 10 to establish a first power supply path between the power supply 2 and the motor 3 in advance of a zero crossing of the back electromotive force by the advance angle, so the motor 3 is excited in advance with an excitation current in a first direction; and establish a second power supply path between the power supply 2 and the motor 3 in advance of a next zero crossing of the back electromotive force by the advance angle, so the motor 3 is excited in advance with the excitation current in a second direction. In this way, the inverter 10 alternately establishes the first power supply path and the second power supply path between the power supply 2 and the motor 3 to alternately change a direction of the excitation current, so that a direct current provided by the power supply 2 is inverted into an alternating current to drive the motor 3 to keep operating.

A half-electric-cycle lasts from motor 3 receives the excitation current to the excitation current changes the direction. In each half electric-cycle, the motor 3 is excited and freewheeled in order.

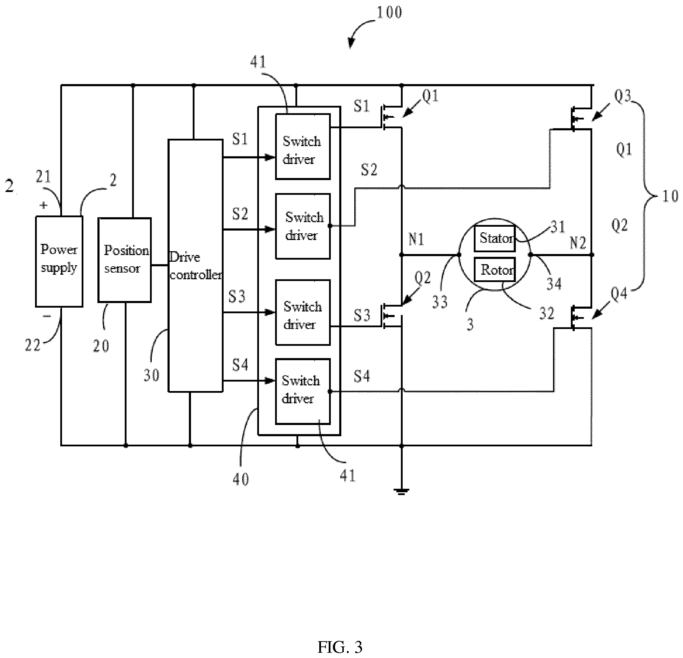

Referring also to Figure 3, which is a diagram of a specific circuit of the motor control system 1. The power supply 2 is a direct current power supply, which includes a positive terminal 21 and a negative terminal 22. The motor 3 further includes a first electrode terminal 33 and a second electrode terminal 34. The stator 31 is a coil winding, and two terminals of the stator 31 are electrically connected to the first electrode terminal 33 and the second electrode terminal 34 respectively. The inverter 10 is electrically connected between the positive terminal 21 of the power supply 2, the negative terminal 22 of the power supply 2, the first electrode terminal 33 and the second electrode terminal 34, and is configured to establish a first power supply path or a second power supply path from the positive terminal 21 and the negative terminal 22 of the power supply 2 to the first electrode terminal 33 and the second electrode terminal 34.

In the first supply path, the positive terminal 21 and the negative terminal 22 of the power supply 2 are connected to the first electrode terminal 33 and the second electrode terminal 34 respectively. In the second supply path, the positive terminal 21 and the negative terminal 22 of the power supply 2 are connected to the second electrode terminal 34 and the first electrode terminal 33 respectively

In the embodiment, the rotor 32 is a permanent magnet and is rotatable relative to the stator 31. The position sensor 20 is arranged near the motor 3, and generates, by detecting a position of the rotor 32, a detection signal including the back electromotive force passes the zero crossing. Specifically, when the position sensor 20 detects a magnetic pole N or a magnetic pole S, a level of the generated detection signal changes and an edge is formed, where the edge indicates that the back electromotive force in the motor 3 passes the zero crossing at this moment.

As shown in Figure 3, in the embodiment, the inverter 10 is an H-bridge circuit, which includes a first semiconductor switch (Q1) Q1, a second semiconductor switch Q2, a third semiconductor switch Q3 and a fourth semiconductor switch Q4. The first semiconductor switch (Q1) Q1 and the second semiconductor switch Q2 are connected in series between the positive terminal 21 and the negative terminal 22 of the power supply 2 in sequence. The third semiconductor switch Q3 and the fourth semiconductor switch Q4 are also connected in series between the positive terminal 21 and the negative terminal 22 of the power supply 2 in sequence. The first electrode terminal 33 and the second electrode terminal 34 of the motor 3 are respectively connected to a connection node N1 of the first semiconductor switch (Q1) Q1 and the second semiconductor switch Q2 and a connection node N2 of the third semiconductor switch Q3 and the fourth semiconductor switch Q4.

The drive controller 30 is connected to the first semiconductor switch (Q1) Q1, the second semiconductor switch Q2, the third semiconductor switch Q3 and the fourth semiconductor switch Q4. The drive controller 30 is configured to output four drive signals S1 to S4 to respectively control the first semiconductor switch (Q1) Q1, the second semiconductor switch Q2, the third semiconductor switch Q3 and the fourth semiconductor switch Q4. In the embodiment, the first semiconductor switch (Q1) Q1, the second semiconductor switch Q2, the third semiconductor switch Q3 and the fourth semiconductor switch Q4 are switches turned on at high levels. In the embodiment, the first semiconductor switch (Q1) Q1, the second semiconductor switch Q2, the third semiconductor switch Q3 and the fourth semiconductor switch Q4 are NMOSFET; or, some are NMOSFET and the others are IGBT or NPNBJT.

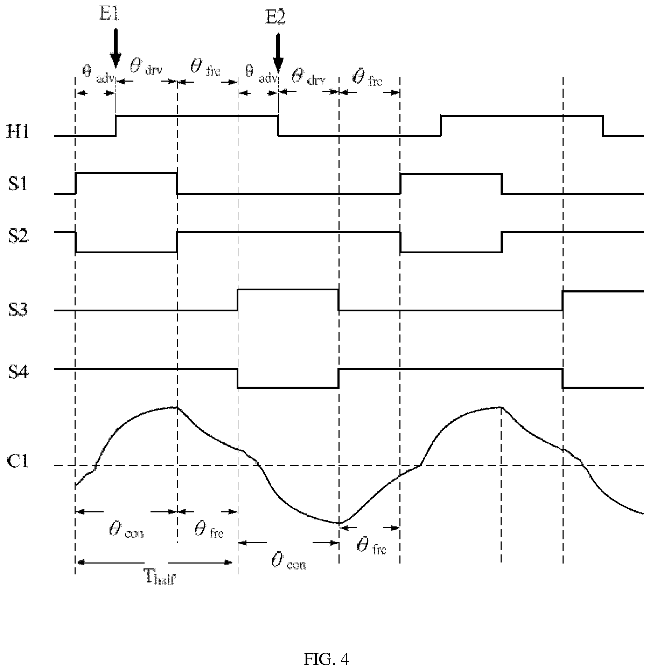

Referring also to Figure 4, which is a timing diagram of a detection signal H1, drive signals S1 to S4, and an excitation current C1. The position sensor 20 detects the position of the rotor 32 and generates the detection signal, a waveform of which varies with a position. When the magnetic pole N or the magnetic pole S of the rotor 32 rotates to a position corresponding to the position sensor 20, the level of the detection signal H1 changes and an edge is formed.

As shown in Figure 4, in a first half-electric-cycle T_{half}, the drive controller 30 controls the drive signal S1 to jump to a high level in advance of an edge E1 of the detection signal H1 by an advance angle θ_{adv}, controls the drive signal S2 to jump to a low level in advance of the edge E1 of the detection signal H1 by the advance angle θ_{adv}, controls the drive signal S3 to remain at a low level, and controls the drive signal S4 to remain at a high level. In this way, in a timing in advance of the edge of the detection signal H1 by the advance angle θ_{adv}, the first semiconductor switch (Q1) Q1 is turned on controlled by the drive signal S1, the second semiconductor switch Q2 is turned off controlled by the drive signal S2, the third semiconductor switch Q3 is turned off controlled by the drive signal S3, and the fourth semiconductor switch Q4 is turned on controlled by the drive signal S4. As a result, the inverter 10 establishes the first supply path between the stator 31 of the motor 3 and the power supply 2, and an excitation voltage is applied to the stator 31 of the motor 3.

The drive controller 30 further controls the drive signal S1 to jump to a low level, the drive signal S2 to jump to a high level, the drive signal S3 to remain at the low level, and the drive signal S4 to remain at the high level after the excitation voltage is applied for a conduction angle θ_{can}. In this case, the first semiconductor switch (Q1) Q1 and the third semiconductor switch Q3 are turned off, the second semiconductor switch Q2 and the fourth semiconductor switch Q4 are turned on, the connection between the stator 31 of the motor 3 and the power supply 2 is cut off. The stator 31 of the motor 3 forms a freewheeling circuit to be freewheeled within a freewheeling angle θ_{fre} with the second semiconductor switch Q2 and the fourth semiconductor switch Q4 which are turned on.

The drive controller 30 determines a position of the advance angle θ_{adv} before the current edge E1 based on a previous edge (i.e., an edge before the edge E1) of the detection signal H1. Apparently, in a half-electric-cycle, (180°-θ_{adv}) is an angle between the previous edge and the advance angle θ_{adv} (the timing for starting the excitation in advance). The drive controller 30 controls the drive signal S1 to jump to a high level at a point of the advance angle θ_{adv} in advance of the edge E1 of the detection signal H1, the drive signal S2 to jump to a low level at a point of the advance angle θ_{adv} in advance of the edge E1 of the detection signal H1, the drive signal S3 to remain at the low level, and the drive signal S4 to remain at the high level. That is, at a point (180°-θ_{adv}) after the previous edge before the edge E1 of the detection signal H1, the drive controller 30 controls the drive signal S1 to jump to the high level, the drive signal S2 to jump to the low level, the drive signal S3 to remain at the low level, and the drive signal S4 to remain at the high level.

In the embodiment, both the conduction angle θ_{con} and the advance angle θ_{adv} are related to a speed and may be obtained from a look-up table. For example, a relation of speeds versus conduction angles θ_{con} and advance angles θ_{adv} is recorded in a look-up table. A corresponding conduction angle θ_{con} and a corresponding advance angle θ_{adv} can be found in the look-up table based on a current speed. Based on the conduction angle θ_{con}=θ_{adv}+θ_{drv}, it can be obtained that: θ_{drv}=θ_{con}-θ_{adv}, where θ_{drv} is a drive angle for which the excitation lasts after the edge E1 of the detection signal. Therefore, the drive controller 30 controls, after the excitation voltage is applied for the conduction angle θ_{con}, the drive signal S1 to jump to a low level, the drive signal S2 to jump to a high level, the drive signal S3 to remain at the low level, and the drive signal S4 to remain at the high level. That is the motor 3 is kept excited within the drive angle θ_{drv} after the edge E1 of the detection signal H1, the drive signal S1 is controlled to jump to the low level after the drive θ_{drv}, the drive signal S2 is controlled to jump to the high level, the drive signal S3 is controlled to remain at the low level, and the drive signal S4 is controlled to remain at the high level.

A sum of the conduction angle θ_{con} and the freewheeling angle θ_{fre} is a half electric-cycle, i.e., θ_{con}+θ_{fre}=180°. Hence, the freewheeling angle θ_{fre} may be obtained based on: θ_{fre}=180°-θ_{con}.

In this way, the drive controller 30 generates the drive signals S1 to S4 based on the detection signal generated by the position sensor 20, the motor 30 is excited in advance of the edge of the detection signal by the advance angle θ_{adv} and freewheeled after the excitation for the conduction angle θ_{can}.

The drive controller 30 switches the supply path after the freewheeling is performed for the freewheeling angle θ_{fre}, i.e., switching the direction of the excitation voltage to enter a next half-electric-cycle, and a process similar to the foregoing process is performed. Specifically, the drive controller 30 controls the drive signal S3 to jump to a high level in advance of a next edge E2 of the detection signal H1 by the advance angle θ_{adv}, controls the drive signal S4 to jump to a low level, controls the drive signal S1 to remain at the low level, and controls the drive signal S2 to remain at the high level. In this case, the third semiconductor switch Q3 and the second semiconductor switch Q2 respectively controlled by the drive signal S3 and the drive signal S2 are turned on, the first semiconductor switch (Q1) Q1 and the fourth semiconductor switch Q4 respectively controlled by the drive signals S1 and S4 are turned off, and the excitation voltage applied to the motor 3 is inverted, to continue driving the rotor 32 of the motor 3 to rotate in the same direction. Similarly, after the inverted excitation voltage is applied for the conduction angle θ_{con}, the drive controller 30 controls the drive signal S 1 to remain at the low level, the drive signal S2 to remain at the high level, the drive signal S3 to jump to a low level and the drive signal S4 to jump to a high level. In this case, the first semiconductor switch (Q1) Q1 and the third semiconductor switch Q3 are turned off, the second semiconductor switch Q2 and the fourth semiconductor switch Q4 are turned on, and the stator 31 of the motor 3 forms a freewheeling circuit to perform freewheeling within the freewheeling angle θ_{fre} with the second semiconductor switch Q2 and the fourth semiconductor switch Q4.

Similar to the previous half-electric-cycle, in advance of a next edge E2 of the detection signal H1 by the advance angle θ_{adv}, the drive signal S3 to jump to a high level, the drive signal S4 is controlled to jump to a low level, the drive signal S1 is controlled to remain at the low level, and the drive signal S2 is controlled to remain at the high level. That is at a point (180°-θ_{adv}) after the current edge E1, the drive signal S3 is controlled to jump to the high level, the drive signal S4 is controlled to jump to the low level, the drive signal S1 is controlled to remain at the low level, and the drive signal S2 is controlled to remain at the high level. Similarly, after the inverted excitation voltage is applied for the conduction angle θ_{con}, the drive controller 30 controls the drive signal S1 to remain at the low level, the drive signal S2 to remain at the high level, the drive signal S3 to jump to a low level and the drive signal S4 to jump to a high level. That is keeping be excited within the drive angle θ_{drv} after the next edge E2 of the detection signal H1, and controlling the generated drive signal S1 to remain at the low level, the drive signal S2 to remain at the high level, the drive signal S3 to jump to the low level and the drive signal S4 to jump to the high level after the drive angle θ_{drv.}

As shown in Figure 4, due to the influence of a residual current, after the inverter 10 switches the supply path in response to the drive signals S1 to S4, a direction of a current C1 flowing through the stator 31 of the motor 3 will change after delaying for a while.

The position sensor 20 is a Hall sensor, and the generated detection signal H1 is a Hall signal. Variation in edge occurs in the Hall signal when the magnetic pole N or the magnetic pole S is in the vicinity, so that an edge is formed.

In the embodiment, the advance angle θ_{adv} varies in a range from zero degree to 30°. That is, during the process of the motor 3 switching from the acceleration mode to the constant speed operating mode, the advance angle θ_{adv} gradually increases from zero degree to 30°. The conduction angle θ_{con} may vary in a range from180°-108°. That is, during a process of the motor 3 starting, entering the acceleration mode and the constant speed operating mode, the conduction angle gradually decreases from 180° to 108°. That is, during the process of the motor 3 starting, entering the acceleration mode and the constant speed operating mode, excitation is performed from within a whole half-electric-cycle to only within 108°.

As shown in Figure 3, the switch drive module 40 includes four switch drivers 41. The four switch drivers 41 are respectively connected between the drive controller 30 and the first semiconductor switch (Q1) Q1, between the drive controller 30 and the second semiconductor switch Q2, between the drive controller 30 and the third semiconductor switch Q3, and between the drive controller 30 and the fourth semiconductor switch Q4, The four switch drivers 41 are configured to respectively receive the four drive signals S 1 to S4 outputted by the drive controller 30 to boost on the drive signals respectively. The four switch drivers 41 transfer the boosted signals to the first semiconductor switch (Q1) Q1, the second semiconductor switch Q2, the third semiconductor switch Q3 and the fourth semiconductor switch Q4, so as to drive the semiconductor switch Q1, the second semiconductor switch Q2, the third semiconductor switch Q3 and the fourth semiconductor switch Q4 to be turned on or turned off.

There is a response time between applying the drive signals to the semiconductor switches in the inverter 10 and actual responding of the semiconductor switches, for example, actually being turned on or turned off. In a case that the speed of the rotor 32 of the motor 3 is very low, the response time may be ignored. In a case that the speed of the rotor 32 of the motor 3 is very high, for example, reaching 10W rpm (revolutions per minute), the response speed may cause great influence. Therefore, in the present disclosure, by gradually increasing the advance angle as the speed of the rotor of the motor 3 increases, the rotor 32 can always reach a pre-determined position where the torque is the maximum when the semiconductor switches actually respond to the applied drive signals, which can improve efficiency of the motor 3. By gradually reducing the conduction angle, freewheeling can be performed within the freewheeling angle, in a case that the excitation voltage is difficult to apply due to the increasing back electromotive force caused by the increasing speed, thus eliminating effect of the back electromotive force to a certain extent.

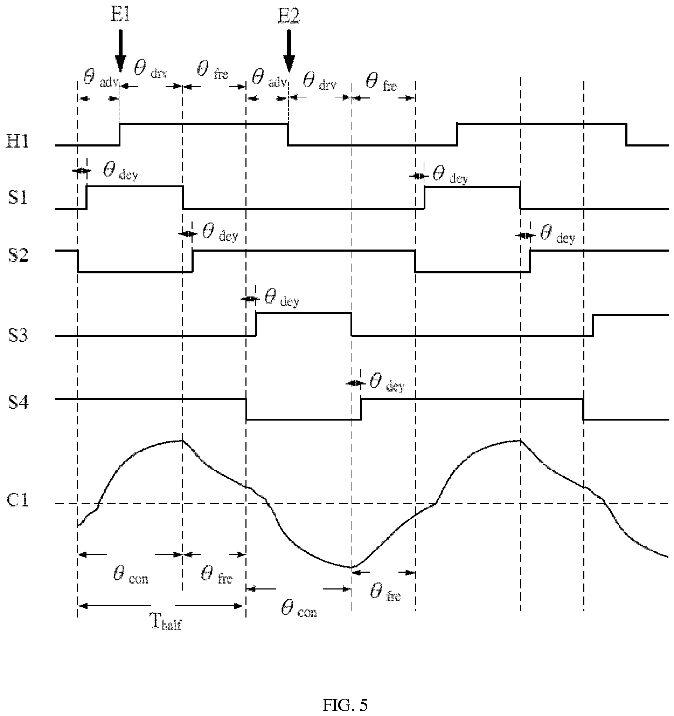

Referring to Figure 5, which is a timing diagram of the detection H1, the drive signals S1 to S4, and the excitation current C1 according to another embodiment of the present disclosure. As described above, there is a response time between applying the drive signals to the semiconductor switches in the inverter 10 and actual responding of the semiconductor switches, for example, actually being turned on or turned off. In controlling the inverter 10 to switching the first supply path and the second supply path to invert the excitation voltage or in performing freewheeling on the motor 3, two semiconductor switches in a left half-bridge or a right half-bridge are respectively turned on and turned off around the same time. If the first semiconductor switch (Q1) Q1 and the second semiconductor switch Q2 in the left half-bridge of the inverter 10 are simultaneously controlled to be turned on and turned off respectively, or the third semiconductor switch Q1 and the fourth semiconductor switch Q4 are simultaneously controlled to be turned on and turned off respectively, a situation in which the first semiconductor switch (Q1) Q1 and the second semiconductor switch Q2 are both turned on at the same time or the third semiconductor switch Q1 and the fourth semiconductor switch Q 4 are both turned on at the same time may occur due to the response time. In this case, a short-circuit may occur in the left half-bridge or the right half-bridge, which affects the rotation of the rotor 32 of the motor 3 and may even damage the semiconductor switches.

Therefore, in order to avoid the above situation, in the embodiment, in a case that two semiconductor switches in the same half-bridge are required to be respectively turned on and turned off around the same time, the drive controller 30 turns off a semiconductor switch which is needed to be turned off, and then turns on a semiconductor switch in the same half-bridge which is needed to be turned on after delaying for a delay angle. In the embodiment, an instant in which the two semiconductor switches in the same half-bridge are required to be respectively turned on and turned off around the same time is an instant for inverting the excitation voltage provided for the motor 3 (i.e., an instant from which the excitation voltage is inverted, which may also be referred to as an instant for starting to provide the excitation voltage in a case that a freewheeling angle exists) or an instant for performing freewheeling on the motor 3 (i.e., an instant from which the freewheeling is performed). The delay angle is very small, for example, 0.1°. Therefore, the two semiconductor switches in the same half-bridge still can be regarded as being respectively turned on and turned off around the same time. Since a turn-on instant of a semiconductor switch to be turned on is later than/delayed from a turn-off instant of a semiconductor switch to be turned off, a situation in which two semiconductor switches in the same half-bridge are turned on at the same time is avoided.

As shown in Figure 5, in the embodiment, one electric-cycle is taken as an example for description. In a case that excitation is to be performed in advance by the advance angle θ_{adv}, in a half-electric-cycle, the drive controller 30 controls the drive signal S2 to jump to a low level in advance of an edge E1 of the detection signal H1 by the advance angle θ_{adv}; and then, controls the drive signal S1 to jump to a high level after delaying for the delay angle θ_{dey}, controls the drive signal S3 to remain at a low level and controls the drive signal S4 to remain at a high level. As a result, in an instant the advance angle θ_{adv} in advance of the edge E1 of the detection signal H1, the second semiconductor switch Q2 controlled by the drive signal S2 is turned off, the third semiconductor switch Q3 controlled by the drive signal S3 is turned off, the fourth semiconductor switch Q4 controlled by the drive signal S4 is turned on, and the first semiconductor switch (Q1) Q1 controlled by the drive signal S1 is turned on after delaying for the delay angle θ_{dey}. Therefore, the first semiconductor switch (Q1) Q1 is delayed to be turned on, avoiding a situation in which the first semiconductor switch (Q1) Q1 and the second semiconductor switch Q2 in the left half-bridge are turned on at the same time.

In the embodiment, the drive controller 30 controls, after the excitation voltage is applied for the conduction angle θ_{con}, the generated drive signal S1 to jump to a low level, the drive signal S3 to remain at the low level, and the drive signal S4 to remain at the high level, and controls the drive signal S2 to jump to a high level after delaying for the delay angle θ_{dey}. In this way, for the first semiconductor switch (Q1) Q1 and the second semiconductor switch Q 2 which need to change states, it still can be ensured that the first semiconductor switch (Q1) Q1 is turned off before the second semiconductor switch Q2 is turned on, avoiding a situation in which the two semiconductor switches are simultaneously turned on.

As shown in Figure 5, in a next half-electric-cycle T_{half}, the process is the same as the above. For the third semiconductor switch Q3 and the fourth semiconductor switch Q4 which need to change states, one of the semiconductor switches is turned off, and the other one is delayed to be turned on. For example, at a point the advance angle θ_{adv} in advance of a next edge E2 of the detection signal H1, the drive controller 30 controls the drive signal S4 to jump to a low level, controls the drive signal S1 to remain at the low level, controls the drive signal S2 to remain at the high level, and controls the drive signal S3 to jump to a high level after delaying for the delay angle θ_{dey}. Therefore, the fourth semiconductor switch Q4 in the right half-bridge is turned off, and the third semiconductor switch Q3 is delayed to be turned on; and the first semiconductor switch (Q1) Q1 remains off, and the second semiconductor switch Q2 remains on. In this case, the inverter 10 establishes the second supply path to invert the excitation voltage applied to the motor 3 to continue driving the rotor 32 of the motor 3 to rotate. Since the fourth semiconductor switch Q4 in the right half-bridge is turned off before the third semiconductor switch Q3 in the right half-bridge is turned on, a situation in which the semiconductor switches in the right half-bridge are turned on at the same time is avoided.

Positional relationships between the elements shown in the drawings of the present disclosure are merely electrical and logical positional relationships rather than representing a positional arrangement of the elements in a product.

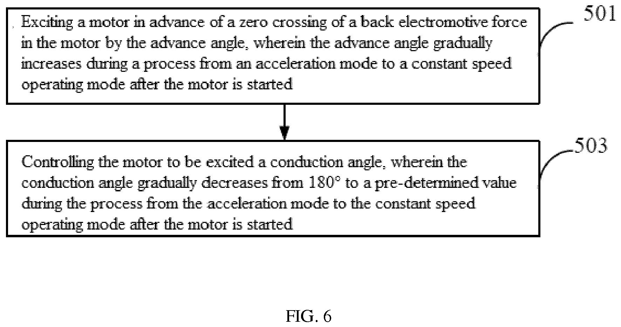

Reference is made to Figure 6, which is a flow chart of a motor control method according to an embodiment of the present disclosure. The method includes steps 501 and 503.

In step 501, exciting a motor 3 in advance of a zero crossing of a back electromotive force by an advance angle in the motor 3, where the advance angle is gradually increased during a process from an acceleration mode to a constant speed operating mode after the motor 3 is started, and specifically, is gradually increased in a range from zero degree to 30°.

In step 503, controlling the motor 3 to be excited within a conduction angle, where the conduction angle is gradually reduced from 180° to a pre-determined value during the process from the acceleration mode to the constant speed operating mode after the motor 3 is started, and the pre-determined value is 108°.

The foregoing embodiments are only some preferred embodiments of the invention and are not intended to limit the invention in any form. In addition, changes can be made by those skilled in the art within the spirit of the present disclosure. Of course, those changes made based on the spirit of the present disclosure shall fall within the protection scope claimed by the present disclosure.

## Claims

1. A motor control system (1) for controlling power supplying for a motor, wherein the motor control system (1) is configured to control the motor (3) be excited in advance of a zero crossing of a back electromotive force by an advance angle, and the advance angle gradually increases from an acceleration mode to a constant speed operating mode after the motor (3) is started, the motor control system (1) is further configured to control the motor (3) to be excited within a conduction angle, and the conduction angle gradually reduces to a pre-determined value from the acceleration mode to the constant speed operating mode after the motor (3) is started.

2. The motor control system (1) according to claim 1, wherein the motor control system (1) controls the motor (3) to be freewheeled within a freewheeling angle after the excitation is performed for the conduction angle.

3. The motor control system (1) according to claim 2, comprising an inverter (10), a position sensor (20) and a drive controller (30); wherein the motor (3) comprises a stator (31) and a rotor (32) which is rotatable relative to the stator (31); the inverter (10) is coupled between a power supply and the motor (3) and to establish or cut off a power supply path between the power supply and the motor (3), and the position sensor (20) is configured to detect a position of the rotor (32) of the motor (3) to generate a detection signal and send the detection signal to the drive controller (30); and the drive controller (30) is coupled between the position sensor (20) and the inverter (10) and is configured to output a drive signal according to the detection signal the inverter (10) is controlled by the drive signal to turn on an electric connection between the power supply and the motor (3) in advance of the zero crossing of the back electromotive force by the advance angle; and the inverter (10) is controlled to cut off the electric connection between the power supply and the motor (3) is freewheeled for the freewheeling angle after the electric connection is turned on for the conduction angle; thereby the motor (3) is freewheeled within the freewheeling angle after the excitation is performed for the conduction angle.

4. The motor control system (1) according to claim 3, wherein the inverter (10) is an H-bridge circuit, which comprises a first semiconductor switch (Q1), a second semiconductor switch (Q2), a third semiconductor switch (Q3) and a fourth semiconductor switch (Q4); the first semiconductor switch (Q1) and the second semiconductor switch (Q2) are connected in series between a positive terminal (21) and a negative terminal (22) of the power supply in sequence, and the third semiconductor switch (Q3) and the fourth semiconductor switch (Q4) are also connected in series between the positive terminal (21) and the negative terminal (22) of the power supply in sequence; and the motor (3) further comprises a first electrode terminal (33) and a second electrode terminal (34), the first electrode terminal (33) is connected to a connection node between the first semiconductor switch (Q1) and the second semiconductor switch (Q2), and the second electrode terminal (34) is connected to a connection node between the third semiconductor switch (Q3) and the fourth semiconductor switch (Q4).

5. The motor control system (1) according to claim 4, wherein the drive controller (30) is connected to the first semiconductor switch (Q1), the second semiconductor switch (Q2), the third semiconductor switch (Q3) and the fourth semiconductor switch (Q4), and is configured to output first, second, third and fourth drive signals to respectively control the first semiconductor switch (Q1), the second semiconductor switch (Q2), the third semiconductor switch (Q3) and the fourth semiconductor switch (Q4), and the first, second, third and fourth semiconductor switches are switches turned on at high levels.

6. The motor control system (1) according to claim 5, wherein in a first half electric-cycle, the drive controller (30) controls the first drive signal to jump to a high level in advance of a current edge of the detection signal by the advance angle, controls the second drive signal to jump to a low level in advance of the edge of the detection signal by the advance angle, controls the third drive signal to remain at a low level, and controls the fourth drive signal to remain at a high level; and the first and the fourth semiconductor switches are turned on, the second and the third semiconductor switches are turned off, and the power supply provides an excitation voltage in a first direction to excite the motor (3).

7. The motor control system (1) according to claim 6, wherein the drive controller (30) controls the first drive signal to jump to a low level after the excitation voltage is applied for the conduction angle, the second drive signal to jump to a high level, the third drive signal to remain at the low level, and the fourth drive signal to remain at the high level; and the first and the third semiconductor switches are turned off, the second and the fourth semiconductor switches are turned on, the electric connection between the motor (3) and the power supply is cut off, and the motor (3) forms a freewheeling circuit to perform the freewheeling with the second semiconductor switch (Q2) and the fourth semiconductor switch (Q4) which are turned on.

8. The motor control system (1) according to claim 6, wherein at a point an angle of (180°-θ_{adv}) after a previous edge of the detection signal, the drive controller (30) controls the first drive signal to jump to a high level, the second drive signal to jump to a low level, the third drive signal to remain at the low level, and the fourth drive signal to remain at the high level, and θ_{adv} is the advance angle.

9. The motor control system (1) according to claim 6, wherein the drive controller (30) controls the motor (3) is kept excited within a drive angle θ_{drv} after the current edge of the detection signal, and after the drive angle θ_{drv}, the first drive signal is controlled to jump to a low level, the second drive signal is controlled to jump to a high level, the third drive signal is controlled to remain at the low level, and the fourth drive signal is controlled to remain at the high level, θ_{drv}=θ_{con}-θ_{adv}, θ_{adv} is the advance angle, and θ_{con} is the conduction angle.

10. The motor control system (1) according to claim 7, wherein in a next half electric-cycle, the drive controller (30) controls the third drive signal to jump to a high level, the fourth drive signal to jump to a low level, the first drive signal to remain at the low level, and the second drive signal to remain at the high level in advance of a next edge of the detection signal, and after the excitation voltage is applied for the conduction angle, the drive controller (30) controls the first drive signal to remain at the low level, the second drive signal to remain at the high level, the third drive signal to jump to a low level and the fourth drive signal to jump to a high level.

11. The motor control system (1) according to claim 1, wherein a range of the advance angle is from zero degree to 30°.

12. The motor control system (1) according to claim 1, wherein the pre-determined value is 108°, and the conduction angle is controlled to gradually decrease from 180° to the pre-determined value.

13. A motor control method comprising: exciting a motor in advance of a zero crossing of a back electromotive force in the motor (3) by the advance angle, wherein the advance angle gradually increases during a process from an acceleration mode to a constant speed operating mode after the motor (3) is started; and
controlling the motor (3) to be excited a conduction angle, wherein the conduction angle gradually decreases from 180° to a pre-determined value during the process from the acceleration mode to the constant speed operating mode after the motor (3) is started.

14. The motor control method according to claim 13, further comprising: controlling the motor (3) to be excited within the conduction angle and to be freewheeled within a freewheeling angle in order in each half-electric-cycle.

15. A vacuum cleaner comprising a motor, wherein the vacuum cleaner further comprises the motor control system (1) according to any one of claims 1 to 12.
